# EUROPEAN PATENT APPLICATION

(11) **EP 2 154 187 A2**
(43) Date of publication of application: **17.02.2010**
(21) Application number: 09290117.2
(22) Date of filing: 18.02.2009
(51) Int. Cl.: C08K 3/10, C08K 9/04, C08J 5/00, C08J 3/215

(54) **Method for fabricating carbon nanotube-metal-polymer nanocomposites**

(30) Priority: 30.07.2008 KR 20080074718
(71) Applicant: Korea Advanced Institute of Science and Technology, Yuseong-Gu, Daejeon 305-701 (KR)
(72) Inventor: Hong, Soon Hyung, 373-1, Gusung-Dong, Yuseong-Ku Daejeon, 305-701 (KR); Mo, Chan Bin, 373-1, Gusung-Dong, Yuseong-Ku Daejeon, 305-701 (KR); Ryu, Seong Woo, 373-1, Gusung-Dong, Yuseong-Ku Daejeon, 305-701 (KR)
(74) Representative: Noel, Chantal Odile

(57) **Abstract**

Disclosed is a method for fabricating carbon nanotube-metal-polymer nanocomposites, in particular, to a method for fabricating a carbon nanotube-metal-polymer nanocomposite wherein the carbon nanotubes decorated with metal portion in a necklace form are homogeneously dispersed in a polymer base. The method for fabricating a carbon nanotube-metal-polymer nanocomposite comprises: preparing carbon nanotube-metal nanocomposite powder by introducing a polyol reducing agent as well as metal precursor in a carbon nanotube colloidal solution and heating the same; dispersing the carbon nanotube-metal nanocomposite powder in a polymer base; and curing the polymer base to form the carbon nanotube-metal-polymer nanocomposite. According to the present invention, as the carbon nanotubes decorated with metal particles in a necklace form are homogeneously dispersed in the polymer base, microwave absorbing and shielding properties of the final product are improved.

## Description

### BACKGROUND OF THE INVENTION

This application claims priority to Korean Patent Application No. 10-2008-0074718, filed on july 30, 2008, in the Korean Intellectual Property Office, the entire contents of which are hereby incorporated by reference.

### 1. Field of the Invention

The present invention relates to a method for fabricating carbon nanotube-metal-polymer nanocomposites, and more particularly, to a method for fabricating carbon nanotube-metal-polymer nanocomposites wherein carbon nanotubes decorated with a metal portion in a necklace form are homogeneously dispersed in a polymer base.

### 2. Description of the Related Art

Since a carbon nanotube was disclosed by Professor Ijima in 1991, it has been well known that the carbon nanotube has various beneficial characteristics such as superior mechanical properties, electric conductivity and/or thermal conductivity over typical carbon fibers. Because of such characteristics, a great deal of studies for improved nanotubes are now conducted. Also, since the carbon nanotube has excellent electromagnetic wave (often referred to as "microwave) shielding and absorbing properties in the wavelength range of GHz, researches and investigations are being continued to develop carbon nanotube-polymer composites.

However, a problem of the carbon nanotube such that a plurality of carbon nanotubes are not homogeneously dispersed in a polymer base, causing deterioration in microwave shielding and absorbing properties, was revealed.

Due to such poorly homogeneous dispersion of the carbon nanotubes in the polymer base, microwave shielding and absorbing properties thereof have been decreased. In order to solve the problem, development of a carbon nanotube containing Fe which is an ingredient useful to increase microwave absorption thereof has been conducted (see R. Che, Adv. Mater. Vol. 16, No. 5, 2004, pp. 401 to 405). Also, an investigation into dispersion of carbon nanotubes in different polymer bases and microwave absorbing properties of the carbon nanotubes has been carried out by Z. Fan (see Material Science and Engineering B. Vo. 132, 2006). In addition, an attempt to increase electrical conductivity of carbon nanotubes through thermal treatment was executed to improve microwave shielding properties thereof (see Y. Huang, Carbon. Vol. 45, 2007, pp. 1614 to 1621). However, conventional methods described above still have restrictions in improving microwave absorbing and shielding properties.

### SUMMARY OF THE INVENTION

Accordingly, it is an object of the present invention to provide a novel method for fabricating a carbon nanotube-metal-polymer nanocomposite with improved microwave absorbing and shielding properties, wherein carbon nanotubes decorated with a metal portion (such as metal particles) in a necklace form are homogeneously dispersed in a polymer base and the metal particles function to improve microwave absorbing and shielding properties described above.

In order to achieve the above object of the present invention, there is provided a method for fabricating a carbon nanotube-metal-polymer nanocomposite comprising: preparing carbon nanotube-metal nanocomposite powder by introducing a polyol reducing agent as well as metal precursor in a carbon nanotube colloidal solution and heating the same; dispersing the carbon nanotube-metal nanocomposite powder in a polymer base; and curing the polymer base to form the carbon nanotube-metal-polymer nanocomposite.

In accordance with the present invention, the colloidal solution may contain a solvent selected from a non-polar solvent and a polyol solvent.

Preferably, the non-polar solvent is at least one selected from a group consisting of iso-octane, triethylamine, ethylene chloride, methylene chloride, carbon tetrachloride, toluene, benzyl ether, isopropyl ether, butyl ether, diethyl ether, octyl ether, diphenyl ether, hexane, chloroform, dimethyl formaldehyde, tetrahydrofuran, benzene, 1,2-dichlorobenzene, methyl acetate, ethyl acetate, butyl alcohol, butanol and xylene.

Preferably, the polyol solvent is at least one selected from a group consisting of ethylene glycol, diethylene glycol, triethylene glycol, tetraethylene glycol, polyethylene glycol, propylene glycol, dipropylene glycol, polypropylene glycol, hexylene glycol, 1,2-hexadecandiol, methyl glycol, butyl glycol, butyl triglycol, butyl polyglycol, hexyl glycol, hexyl diglycol, ethylhexyl glycol, ethylhexyl diglycol, aryl glycol, phenyl glycol, phenyl diglycol, benzyl glycol, methylpropylene glycol, methylpropylene diglycol, methylpropylene triglycol, propylpropylene glycol, propylpropylene diglycol, butylpropylene glycol, butylpropylene diglycol, phenylpropylene glycol and methylpropylene glycol acetate.

In accordance with the present invention, the polyol reducing agent may include a polyol containing compound. In accordance with the present invention, the metal precursor may be at least one selected from a group consisting of Mg, Al, K, Ca, Sc, Ti, V, Cr, Mn, Fe, Co, Ni, Cu, Zn, Ga, Rb, Sr, Y, Zr, Mo, Ru, Rh, Pd, Ag, Cd, In, Sn, Cs, Ba, La, Ce, Nd, Sm, Eu, Gd, Tb, W, Cd, Sn, Hf, Ir, Pt and Pb. However, the metal precursor is not particularly limited to the above and may be any metal reducible by the polyol reducing agent.

Preferably, metal particles of the carbon nanotube-metal nanocomposite powder have a size ranging from 1 to 1,000nm.

Preferably, metal particles of the carbon nanotube-metal nanocomposite powder decorate carbon nanotubes in a necklace form.

Preferably, a polymer resin used for dispersing the carbon nanotube-metal nanocomposite powder therein has a viscosity ranging from 200 to 30,000 cps.

Preferably, the dispersing process is executed by ultrasonic treatment. In accordance with the present invention, the ultrasonic treatment may be carried out at 20 to 80°C for 30 minutes to 48 hours.

Preferably, the dispersing process includes dispersing 0.001 to 50wt.% of the carbon nanotube-metal nanocomposite powder in the polymer resin.

Preferably, the curing is conducted at 20 to 300°C under 1 to 10 atm for 30 minutes to 48 hours.

According to the present invention, as the carbon nanotubes decorated with metal particles in a necklace form are homogeneously dispersed in the polymer base, microwave absorbing and shielding properties of the carbon nanotube-metal-polymer nanocomposites are improved.

### BRIEF DESCRIPTION OF THE DRAWINGS

These and other objects, features, aspects, and advantages of the present invention will be more fully described in the following detailed description of preferred embodiments and examples, taken in conjunction with the accompanying drawings. In the drawings:
FIG. 1 is a flowchart illustrating a method for fabricating a carbon nanotube-metal-polymer nanocomposite according to the present invention;
FIG. 2 is an electron microphotograph showing a carbon nanotube-Ni nanocomposite powder prepared according to an embodiment of the present invention; and
FIG. 3 is an electron microphotograph showing a carbon nanotube-Ni-epoxy nanocomposite fabricated according to an embodiment of the present invention.

### DETAILED DESCRIPTION OF THE INVENTION

Hereinafter, preferred embodiments of the present invention will be described in detail in the following example, which is given for illustrative purposes only and should not be construed as limiting the spirit and scope of the invention, with reference to accompanying drawings.

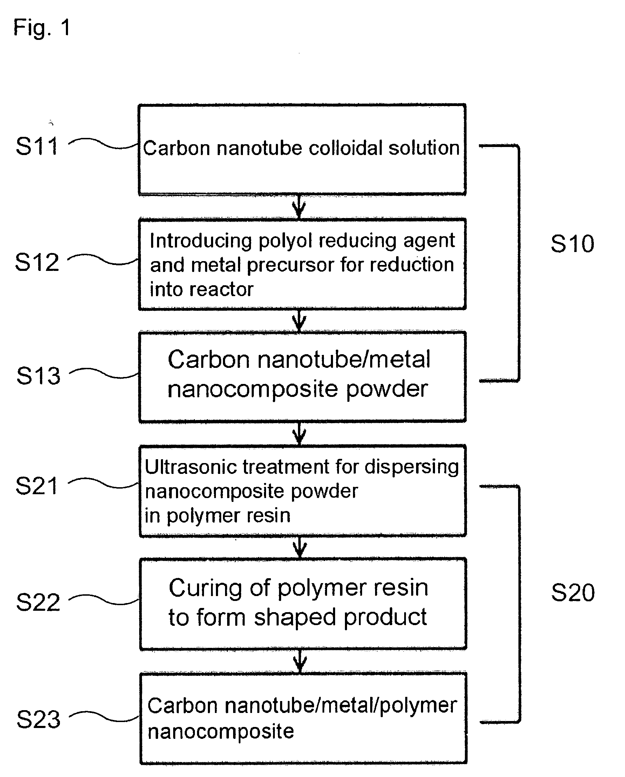

FIG. 1 is a flowchart illustrating a method for fabricating a carbon nanotube-metal-polymer nanocomposite according to the present invention. As illustrated in Fig. 1, the method for fabricating a carbon nanotube-metal-polymer nanocomposite according to the present invention generally includes a polyol using process S10 and a dispersing process S20.

In the polyol using process S10, a colloidal solution containing carbon nanotubes homogeneously dispersed therein is firstly prepared (S11). Next, a polyol reducing agent and a metal precursor are introduced to the colloidal solution, followed by heating the mixture to execute a reductive reaction of the metal precursor into metal substance(S12). Then, the resulting metal substance from the process of S12 is added to the colloidal solution obtained from the process of S11. As a result, carbon nanotube-metal nanocomposite powder decorated with metal particles having a particle size of 1 to 1,000nm in a necklace form is formed (S13).

Preferably, the carbon nanotube is a single walled carbon nanotube or a multiwalled carbon nanotube.

The polyol reducing agent may include polyol containing compounds. Such polyol using process (S10) has an advantage of easily controlling shape and size of the metal particles in spite of low generation rate of metal particles.

The size of the carbon nanotube-metal nanocomposite powder will vary depending on reaction temperature and time of the metal precursor with the polyol reducing agent. With increased reaction temperature and time, the size of the powder may be increased.

The colloidal solution may be prepared using a polyol solvent. The polyol solvent may be at least one selected from a group consisting of ethylene glycol, diethylene glycol, triethylene glycol, tetraethylene glycol, polyethylene glycol, propylene glycol, dipropylene grycol, polypropylene glycol, hexylene glycol, 1,2-hexadecanediol, methyl glycol, butyl glycol, butyl triglycol, butyl polyglycol, hexyl glycol, hexyl diglycol, ethylhexyl glycol, ethylhexyl diglycol, aryl glycol, phenyl glycol, phenyl diglycol, benzyl glycol, methylpropylene glycol, methylpropylene diglycol, methylpropylene triglycol, propylpropylene glycol, propylpropylene diglycol, butylpropylene glycol, butylpropylene diglycol, phenylpropylene glycol and methylpropylene glycol acetate.

The metal precursor may include at least one selected from Mg, Al, K, Ca, Sc, Ti, V, Cr, Mn, Fe, Co, Ni, Cu, Zn, Ga, Rb, Sr, Y, Zr, Mo, Ru, Rh, Pd, Ag, Cd, In, Sn, Cs, Ba, La, Ce, Nd, Sm, Eu, Gd, Tb, W, Cd, Sn, Hf, Ir, Pt and Pb.

The dispersing process S20 may include dispersing 0.001 to 50wt.% (percent by weight) of the carbon nanotube-metal nanocomposite powder in a polymer resin with ultrasonic waves at 20 to 80°C for 30 minutes to 48 hours (S21) . When placing the polymer resin at 20 to 300°C under 1 to 10 atm for 30 minutes to 48 hours, the polymer resin is cured and formed into a shaped product (S22), thereby forming a carbon nanotube-metal-polymer nanocomposite (S23).

The polymer resin may include a thermosetting resin. The thermosetting resin is selected from a group consisting of phenol resin, epoxy resin and polyimide resin, for instance.

The polymer resin may include a thermoplastic resin. The thermoplastic resin may be at least one selected from a group consisting of polyethylene resin, polypropylene resin, poly-4-methylpenten-1 resin, polymethyl methacrylate resin, acrylonitrile resin, polyvinyl chloride resin, polyvinyl acetate resin, polyvinyl alcohol resin, polyvinyl butyral resin, polyvinylidene chloride resin, polystyrene resin, AS resin, ABS resin, elastomer resin, fluorine resin, ethylene tetrafluoride resin, ethylene trifluoride resin, polyvinylidene fluoride resin, polyvinyl fluoride resin, nitrocellulose resin, cellulose acetate resin, ethyl cellulose resin and propylene cellulose resin.

Alternatively, the thermoplastic resin may be at least one selected from a group consisting of polyamide resin, polyamideimide resin, polyacetal resin, polycarbonate resin, polyethylene butarate resin, polybutylene butarate resin, ionomor resin, polysulfone resin, polyethersulfone resin, polyphenylene ether resin, polyphenylene sulfide resin, polyetherimide resin, polyetheretherketone resin, aromatic polyester resin, econol resin and polyarylate resin, and contains benzene having a backbone structure substituted with an oxygen atom O, nitrogen atom N or sulfur atom S.

Meanwhile, a dispersing temperature may be selected as a processing parameter during dispersion of the carbon nanotube-metal nanocomposite powder. Accordingly, varying a viscosity of the polymer resin may control a degree for dispersion of the polymer resin. The viscosity of the polymer resin preferably ranges from 200 to 30,000 cps.

### EXAMPLE

A particular procedure for fabrication of the carbon nanotube-metal-polymer nanocomposite will be described as follows.

At first, Ni metal as well as a polyol reducing agent were added to a carbon nanotube colloidal solution. Then, the Ni metal reacted with the polyol reducing agent at 190 to 300°C for 30 minutes to 2 hours to produce carbon nanotube-Ni nanocomposite powder decorated with Ni metal particles in a necklace form. In this regard, the carbon nanotube-Ni nanocomposite powder had 50% by volume of carbon nanotubes by regulating amounts of the Ni metal and the carbon nanotubes to be added.

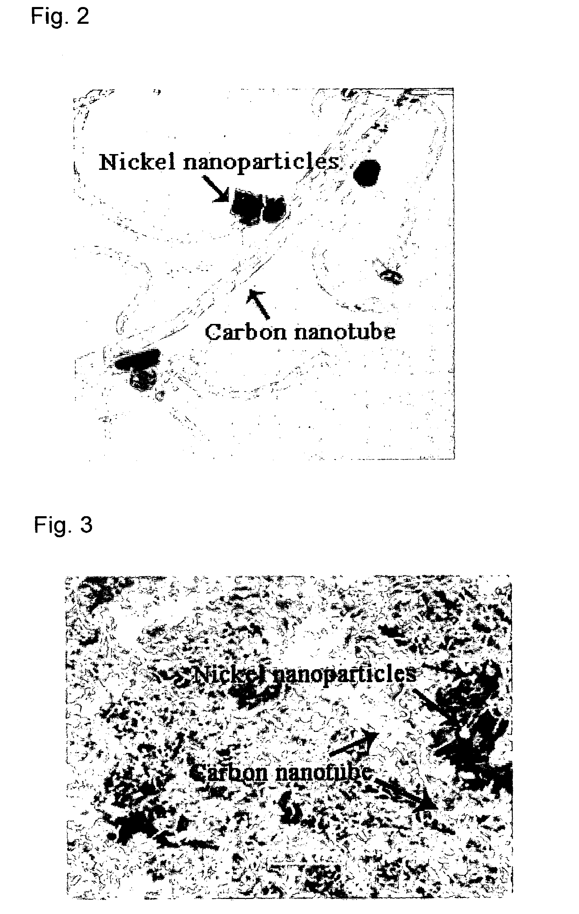

Such produced carbon nanotube-Ni nanocomposite powder was dispersed in epoxy resin at 30 to 80°C by ultrasonic treatment. Following this, the epoxy resin was formed into a shaped product using a curing agent at 80 to 120°C so as to produce a carbon nanotube-Ni-epoxy nanocomposite. Fig. 2 shows an electron microphotograph of the carbon nanotube-Ni nanocomposite powder prepared above, while Fig. 3 shows another electron microphotograph of the produced carbon nanotube-Ni-epoxy nanocomposite.

Conventional processes in the related art did not solve a problem concerning agglomeration of carbon nanotubes in a polymer base. Therefore, the present invention proposed a novel process for improving microwave absorbing and shielding properties in order to solve the above problem. Briefly, the present invention does not cause agglomeration of carbon nanotubes in the polymer base. In addition, metal particles and carbon nanotubes may form an integrated microfine structure according to the present invention, so that the present inventive nanocomposite exhibits improved electrical conductivity and enhanced microwave shielding and absorbing properties in a wavelength range of GHz.

Furthermore, the nanocomposite of the present invention may be applied as a microwave absorptive substance in a case of using a ferromagnetic metal in fabricating the nanocomposite. Alternatively, using any conductive metal may fabricate the present inventive nanocomposite which is used as a microwave shielding substance. The above both substances can be employed in the wavelength range of GHz.

While the present invention has been described with reference to the preferred embodiments, it will be understood by those skilled in the art that various modifications and variations may be made therein without departing from the scope of the present invention as defined by the appended claims.

## Claims

1. A method for fabricating a carbon nanotube-metal-polymer nanocomposite, comprising:
preparing carbon nanotube-metal nanocomposite powder by introducing a polyol reducing agent as well as metal precursor in a carbon nanotube colloidal solution and heating the same;
dispersing the carbon nanotube-metal nanocomposite powder in a polymer base; and
curing the polymer base to form the carbon nanotube-metal-polymer nanocomposite.

2. The method according to claim 1, wherein the colloidal solution contains a solvent selected from a non-polar solvent and a polyol solvent.

3. The method according to claim 2, wherein the non-polar solvent is at least one selected from a group consisting of iso-octane, triethylamine, ethylene chloride, methylene chloride, carbon tetrachloride, toluene, benzyl ether, isopropyl ether, butyl ether, diethyl ether, octyl ether, diphenyl ether, hexane, chloroform, dimethyl formaldehyde, tetrahydrofuran, benzene, 1,2-dichlorobenzene, methyl acetate, ethyl acetate, butyl alcohol, butanol and xylene.

4. The method according to claim 2, wherein the polyol solvent is at least one selected from a group consisting of ethylene glycol, diethylene glycol, triethylene glycol, tetraethylene glycol, polyethylene glycol, propylene glycol, dipropylene glycol, polypropylene glycol, hexylene glycol, 1,2-hexadecanediol, methyl glycol, butyl glycol, butyl triglycol, butyl polyglycol, hexyl glycol, hexyl diglycol, ethylhexyl glycol, ethylhexyl diglycol, aryl glycol, phenyl glycol, phenyl diglycol, benzyl glycol, methylpropylene glycol, methylpropylene diglycol, methylpropylene triglycol, propylpropylene glycol, propylpropylene diglycol, butylpropylene glycol, butylpropylene diglycol, phenylpropylene glycol and methylpropylene glycol acetate.

5. The method according to anyone of claims 1-4, wherein the polyol reducing agent includes a polyol containing compound.

6. The method according to anyone of claims 1-5, wherein the metal precursor is at least one selected from a group consisting of Mg, Al, K, Ca, Sc, Ti, V, Cr, Mn, Fe, Co, Ni, Cu, Zn, Ga, Rb, Sr, Y, Zr, Mo, Ru, Rh, Pd, Ag, Cd, In, Sn, Cs, Ba, La, Ce, Nd, Sm, Eu, Gd, Tb, W, Cd, Sn, Hf, Ir, Pt and Pb.

7. The method according to anyone of claims 1-6, wherein the carbon nanotube is a single walled carbon nanotube or a multiwalled carbon nanotube.

8. The method according to anyone of claims 1-7, wherein metal particles of the carbon nanotube-metal nanocomposite powder have a size ranging from 1 to 1,000nm.

9. The method according to anyone of claims 1-8, wherein metal particles of the carbon nanotube-metal nanocomposite powder decorate carbon nanotubes in a necklace form.

10. The method according to anyone of claims 1-9, wherein a polymer resin used for dispersing the carbon nanotube-metal nanocomposite powder therein has a viscosity ranging from 200 to 30,000 cps.

11. The method according to anyone of claims 1-10, wherein the dispersing process is executed by ultrasonic treatment.

12. The method according to claim 11, wherein the ultrasonic treatment is carried out at 20 to 80°C for 30 minutes to 48 hours.

13. The method according to anyone of claims 1-12, wherein the curing is conducted at 20 to 300°C under 1 to 10 atm for 30 minutes to 48 hours.

14. The method according to anyone of claims 1-13, wherein the dispersing process includes dispersing 0.001 to 50wt.% of the carbon nanotube-metal nanocomposite powder in the polymer resin.

15. The method according to anyone of claims 1-14, wherein the polymer resin is a thermosetting resin.

16. The method according to claim 15, wherein the thermosetting resin is at least one selected from a group consisting of phenol resin, epoxy resin and polyimide resin.

17. The method according to anyone of claims 1-14, wherein the polymer resin is a thermoplastic resin.

18. The method according to claim 17, wherein the thermoplastic resin is at least one selected from a group consisting of polyethylene resin, polypropylene resin, poly-4-methylpenten-1 resin, polymethyl methacrylate resin, acrylonitrile resin, polyvinyl chloride resin, polyvinyl acetate resin, polyvinyl alcohol resin, polyvinyl butyral resin, polyvinylidene chloride resin, polystyrene resin, AS resin, ABS resin, elastomer resin, fluorine resin, ethylene tetrafluoride resin, ethylene trifluoride resin, polyvinylidene fluoride resin, polyvinyl fluoride resin, nitrocellulose resin, cellulose acetate resin, ethyl cellulose resin and propylene cellulose resin.

19. The method according to claim 17, wherein the thermoplastic resin is at least one selected from a group consisting of polyamide resin, polyamideimide resin, polyacetal resin, polycarbonate resin, polyethylene butarate resin, polybutylene butarate resin, ionomor resin, polysulfone resin, polyethersulfone resin, polyphenylene ether resin, polyphenylene sulfide resin, polyetherimide resin, polyetheretherketone resin, aromatic polyester resin, econol resin and polyarylate resin, and the resin contains benzene having a backbone structure substituted with an oxygen atom O, nitrogen atom N or sulfur atom S.
